# EUROPEAN PATENT APPLICATION

(11) **EP 3 907 480 A1**
(43) Date of publication of application: **10.11.2021**
(21) Application number: 20756041.8
(22) Date of filing: 30.01.2020
(51) Int. Cl.: G01H 1/00, H02N 11/00, G01M 99/00, H02K 11/20

(54) **THERMOELECTRIC POWER GENERATION DEVICE AND VIBRATION DETECTION SYSTEM**

(30) Priority: 15.02.2019 JP 2019025943; 18.10.2019 JP 2019191061
(71) Applicant: KELK Ltd., Kanagawa 254-8543 (JP)
(72) Inventor: MURATA, Tomonori, Hiratsuka-shi, Kanagawa 254-8543 (JP); GOTO, Daisuke, Hiratsuka-shi, Kanagawa 254-8543 (JP); SHIBATA, Isao, Hiratsuka-shi, Kanagawa 254-8543 (JP); MURASE, Takahiro, Hiratsuka-shi, Kanagawa 254-8543 (JP)
(74) Representative: Flügel Preissner Schober Seidel
(86) International application number: PCT/JP2020/003547
(87) International publication number: WO 2020/166363

(57) **Abstract**

A thermoelectric generator includes: a thermoelectric generator module; a vibration sensor driven by power generated by the thermoelectric generator module; and a wireless communication device that transmits detection data of the vibration sensor.

## Description

### Field

The present invention relates to a thermoelectric generator and a vibration detection system.

### Background

It is known a technique for detecting vibration generated during operation of an apparatus by using an acceleration sensor in order to diagnose whether or not the apparatus is abnormal.

### Citation List

### Patent Literature

Patent Literature 1: JP 2009-020090 A

### Summary

### Technical Problem

In a case where a cable is used to connect an acceleration sensor and a power supply in order to supply power to the acceleration sensor, an installation position of the acceleration sensor may be restricted. In a case where a primary cell is used, it is necessary to replace the primary cell every certain period of time. In a case where a secondary cell is used, it is necessary to charge the secondary cell every certain period of time. In a case where a cable or a battery is used, it may be difficult to efficiently diagnose whether or not an apparatus is abnormal.

An object of an aspect of the present invention is to efficiently diagnose whether or not an apparatus is abnormal.

### Solution to Problem

According to an aspect of the present invention, a thermoelectric generator, comprises: a thermoelectric generator module; a vibration sensor driven by power generated by the thermoelectric generator module; and a wireless communication device that transmits detection data of the vibration sensor.

### Advantageous Effects of Invention

According to an aspect of the present invention, it is possible to efficiently diagnose whether or not an apparatus is abnormal.

### Brief Description of Drawings

FIG. 1 is a cross-sectional view of a thermoelectric generator according to a first embodiment.
FIG. 2 is a perspective view schematically illustrating a thermoelectric generator module according to the first embodiment.
FIG. 3 is a block diagram of the thermoelectric generator according to the first embodiment.
FIG. 4 illustrates detection data of a vibration sensor according to the first embodiment.
FIG. 5 is a diagram for describing a method of calculating a maximum value and a minimum value of vibration according to the first embodiment.
FIG. 6 is a block diagram of a thermoelectric generator according to a second embodiment.
FIG. 7 is a schematic diagram of a vibration detection system according to a third embodiment.

### Description of Embodiments

Hereinafter, embodiments according to the present invention will be described with reference to the drawings, but the present invention is not limited thereto. Components of the embodiments described below can be appropriately combined. Further, some components may not be used in some cases.

In the following description, an XYZ orthogonal coordinate system is set, and positional relationships between units will be described with reference to this XYZ orthogonal coordinate system. A direction parallel to an X axis in a predetermined plane is defined as an X-axis direction, a direction parallel to a Y axis orthogonal to the X axis in the predetermined plane is defined as a Y-axis direction, and a direction parallel to a Z axis orthogonal to the predetermined plane is defined as a Z-axis direction. An XY plane including the X axis and the Y axis is parallel to the predetermined plane.

### [First Embodiment]

### <Thermoelectric generator>

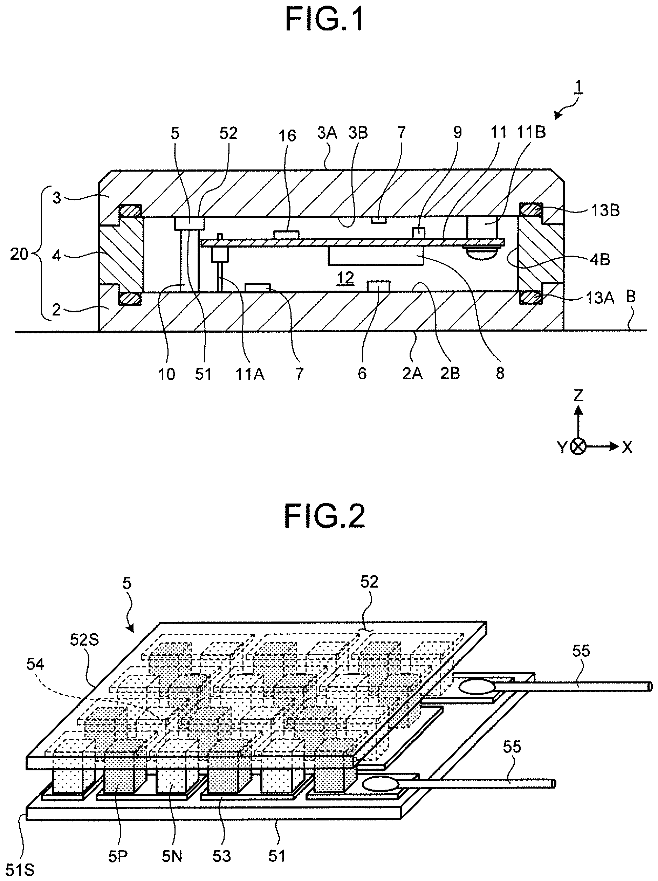

A first embodiment will be described. FIG. 1 is a cross-sectional view of a thermoelectric generator 1 according to the present embodiment. The thermoelectric generator 1 is installed on an apparatus B. The apparatus B is provided in an industrial facility such as a factory. Examples of the apparatus B encompass a motor for operating a pump. The apparatus B functions as a heat source of the thermoelectric generator 1.

As illustrated in FIG. 1, the thermoelectric generator 1 includes a heat receiver 2, a heat radiator 3, a peripheral wall 4, a thermoelectric generator module 5, a power storage unit 16, a vibration sensor 6, a temperature sensor 7, a microcomputer 8, a wireless communication device 9, a heat transfer member 10, and a substrate 11.

The heat receiver 2 is installed on the apparatus B. The heat receiver 2 is a plate-like member. The heat receiver 2 is made from a metal material such as aluminum or copper. The heat receiver 2 receives heat from the apparatus B. The heat of the heat receiver 2 is transferred to the thermoelectric generator module 5 via the heat transfer member 10.

The heat radiator 3 faces the heat receiver 2 with a gap interposed therebetween. The heat radiator 3 is a plate-like member. The heat radiator 3 is made from a metal material such as aluminum or copper. The heat radiator 3 receives heat from the thermoelectric generator module 5. The heat of the heat radiator 3 is radiated into an atmospheric space around the thermoelectric generator 1.

The heat receiver 2 has a heat receiving surface 2A facing a surface of the apparatus B and an inner surface 2B facing in a direction opposite to a direction of the heat receiving surface 2A. The heat receiving surface 2A faces in the -Z direction. The inner surface 2B faces in the +Z direction. Both the heat receiving surface 2A and the inner surface 2B are plane. Both the heat receiving surface 2A and the inner surface 2B are parallel to the XY plane. In the XY plane, the heat receiver 2 has a substantially quadrangular outer shape. Note that the heat receiver 2 does not need to have a quadrangular outer shape. The heat receiver 2 may have a circular, elliptical, or any polygonal outer shape.

The heat radiator 3 has a heat radiating surface 3A facing the atmospheric space and an inner surface 3B facing in a direction opposite to a direction of the heat radiating surface 3A. The heat radiating surface 3A faces in the +Z direction. The inner surface 3B faces in the -Z direction. Both the heat radiating surface 3A and the inner surface 3B are plane. Both the heat radiating surface 3A and the inner surface 3B are parallel to the XY plane. In the XY plane, the heat radiator 3 has a substantially quadrangular outer shape. Note that the heat radiator 3 does not need to have a quadrangular outer shape. The heat radiator 3 may have a circular, elliptical, or any polygonal outer shape.

In the XY plane, the outer shape and dimensions of the heat receiver 2 are substantially equal to the outer shape and dimensions of the heat radiator 3. Note that the outer shape and dimensions of the heat receiver 2 may be different from the outer shape and dimensions of the heat radiator 3.

The peripheral wall 4 is placed between a peripheral edge of the inner surface 2B of the heat receiver 2 and a peripheral edge of the inner surface 3B of the heat radiator 3. The peripheral wall 4 connects the heat receiver 2 and the heat radiator 3. The peripheral wall 4 is made from synthetic resin.

In the XY plane, the peripheral wall 4 is annular. In the XY plane, the peripheral wall 4 has a substantially quadrangular outer shape. The heat receiver 2, the heat radiator 3, and the peripheral wall 4 define an internal space 12 of the thermoelectric generator 1. The peripheral wall 4 has an inner surface 4B facing the internal space 12. The inner surface 2B of the heat receiver 2 faces the internal space 12. The inner surface 3B of the heat radiator 3 faces the internal space 12. The atmospheric space around the thermoelectric generator 1 is an external space of the thermoelectric generator 1.

The heat receiver 2, the heat radiator 3, and the peripheral wall 4 function as a housing of the thermoelectric generator 1 that defines the internal space 12. In the following description, the heat receiver 2, the heat radiator 3, and the peripheral wall 4 will be collectively referred to as "housing 20" as appropriate.

A seal member 13A is placed between the peripheral edge of the inner surface 2B of the heat receiver 2 and a -Z-side end surface of the peripheral wall 4. A seal member 13B is placed between the peripheral edge of the inner surface 3B of the heat radiator 3 and a +Z-side end surface of the peripheral wall 4. Each of the seal members 13A and 13B includes, for example, an O-ring. The seal member 13A is placed in a recess provided in the peripheral edge of the inner surface 2B. The seal member 13B is placed in a recess provided in the peripheral edge of the inner surface 3B. The seal members 13A and 13B restrain a foreign object in the external space of the thermoelectric generator 1 from entering the internal space 12.

The thermoelectric generator module 5 generates power by using the Seebeck effect. The thermoelectric generator module 5 is placed between the heat receiver 2 and the heat radiator 3. The thermoelectric generator module 5 generates power when a -Z-side end surface 51 of the thermoelectric generator module 5 is heated to cause a temperature difference between the -Z-side end surface 51 and a +Z-side end surface 52 of the thermoelectric generator module 5.

The end surface 51 faces in the -Z direction. The end surface 52 faces in the +Z direction. Both the end surfaces 51 and 52 are plane. Both the end surfaces 51 and 52 are parallel to the XY plane. In the XY plane, the thermoelectric generator module 5 has a substantially quadrangular outer shape.

The end surface 52 faces the inner surface 3B of the heat radiator 3. The thermoelectric generator module 5 is fixed to the heat radiator 3. The heat radiator 3 and the thermoelectric generator module 5 are bonded to each other by, for example, an adhesive.

Note that, although the thermoelectric generator module 5 is in contact with the heat radiator 3 in the example of FIG. 1, the thermoelectric generator module 5 may be in contact with the heat receiver 2.

The power storage unit 16 stores power generated by the thermoelectric generator module 5. Examples of the power storage unit 16 encompass a capacitor and a secondary cell.

The vibration sensor 6 detects vibration of the apparatus B. The vibration sensor 6 is driven by power generated by the thermoelectric generator module 5. The vibration sensor 6 is placed in the internal space 12. In the present embodiment, the vibration sensor 6 is supported by the inner surface 2B of the heat receiver 2.

Examples of the vibration sensor 6 encompass an acceleration sensor, a speed sensor, and a displacement sensor. In the present embodiment, the vibration sensor 6 can detect vibration of the apparatus B in three directions, i.e., the X-axis direction, the Y-axis direction, and the Z-axis direction.

The temperature sensor 7 detects a temperature of the apparatus B. The temperature sensor 7 is driven by power generated by the thermoelectric generator module 5. The temperature sensor 7 is placed in the internal space 12. In the present embodiment, the temperature sensor 7 is supported by the inner surface 3B of the heat radiator 3. Note that the temperature sensor 7 may be supported by the inner surface 2B of the heat receiver 2.

The microcomputer 8 controls the thermoelectric generator 1. The microcomputer 8 is driven by power generated by the thermoelectric generator module 5. The microcomputer 8 is placed in the internal space 12. In the present embodiment, the microcomputer 8 is supported by the substrate 11.

The wireless communication device 9 transmits detection data of the vibration sensor 6. The wireless communication device 9 transmits detection data of the temperature sensor 7. The wireless communication device 9 is driven by power generated by the thermoelectric generator module 5. The wireless communication device 9 is placed in the internal space 12. In the present embodiment, the wireless communication device 9 is supported by the substrate 11.

The heat transfer member 10 connects the heat receiver 2 and the thermoelectric generator module 5. The heat transfer member 10 transfers heat of the heat receiver 2 to the thermoelectric generator module 5. The heat transfer member 10 is made from a metal material such as aluminum or copper. The heat transfer member 10 is a rod-like member elongated in the Z-axis direction. The heat transfer member 10 is placed in the internal space 12.

The substrate 11 includes a control board. The substrate 11 is placed in the internal space 12. The substrate 11 is connected to the heat receiver 2 via a support member 11A. The substrate 11 is connected to the heat radiator 3 via a support member 11B. The substrate 11 is supported by the support member 11A and the support member 11B so as to be apart from both the heat receiver 2 and the heat radiator 3.

The substrate 11 supports the microcomputer 8. Detection data of the vibration sensor 6 and detection data of the temperature sensor 7 are transmitted by the wireless communication device 9 to a management computer 100 existing outside the thermoelectric generator 1.

### <Thermoelectric generator module>

FIG. 2 is a perspective view schematically illustrating the thermoelectric generator module 5 according to the present embodiment. The thermoelectric generator module 5 includes p-type thermoelectric semiconductor elements 5P, n-type thermoelectric semiconductor elements 5N, first electrodes 53, second electrodes 54, a first substrate 51S, and a second substrate 52S. In the XY plane, the p-type thermoelectric semiconductor elements 5P and the n-type thermoelectric semiconductor elements 5N are alternately arranged. Each of the first electrodes 53 is connected to both the p-type thermoelectric semiconductor element 5P and the n-type thermoelectric semiconductor element 5N. Each of the second electrodes 54 is connected to both the p-type thermoelectric semiconductor element 5P and the n-type thermoelectric semiconductor element 5N. A lower surface of the p-type thermoelectric semiconductor element 5P and a lower surface of the n-type thermoelectric semiconductor element 5N are connected to the first electrode 53. An upper surface of the p-type thermoelectric semiconductor element 5P and an upper surface of the n-type thermoelectric semiconductor element 5N are connected to the second electrode 54. The first electrode 53 is connected to the first substrate 51S. The second electrode 54 is connected to the second substrate 52S.

Both the p-type thermoelectric semiconductor element 5P and the n-type thermoelectric semiconductor element 5N include, for example, a BiTe-based thermoelectric material. Both the first substrate 51S and the second substrate 52S are made from an electrical insulating material such as ceramics or polyimide.

The first substrate 51S has the end surface 51. The second substrate 52S has the end surface 52. The first substrate 51S is heated to cause a temperature difference between a +Z-side end and a -Z-side end of each of the p-type and n-type thermoelectric semiconductor elements 5P and 5N. When the temperature difference is caused between the +Z-side end and the -Z-side end of the p-type thermoelectric semiconductor element 5P, holes move in the p-type thermoelectric semiconductor element 5P. When the temperature difference is caused between the +Z-side end and the -Z-side end of the n-type thermoelectric semiconductor element 5N, electrons move in the n-type thermoelectric semiconductor element 5N. The p-type thermoelectric semiconductor element 5P and the n-type thermoelectric semiconductor element 5N are connected via the first electrode 53 and the second electrode 54. The holes and the electrons cause a potential difference between the first electrode 53 and the second electrode 54. When the potential difference is caused between the first electrode 53 and the second electrode 54, the thermoelectric generator module 5 generates power. A lead wire 55 is connected to the first electrodes 53. The thermoelectric generator module 5 outputs power via the lead wire 55.

### <Microcomputer>

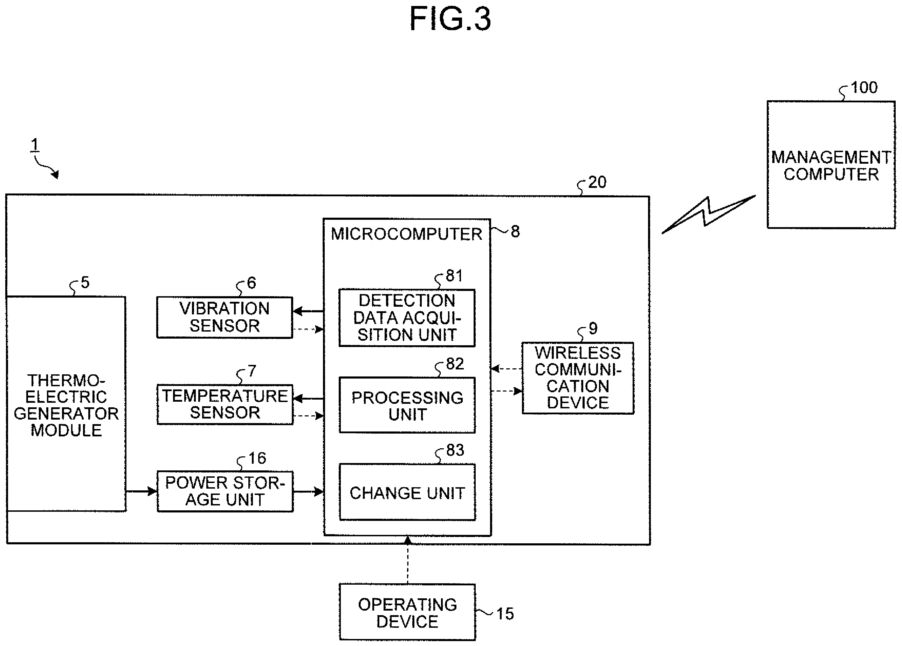

FIG. 3 is a block diagram of the thermoelectric generator 1 according to the present embodiment. As illustrated in FIG. 3, the thermoelectric generator module 5, the vibration sensor 6, the temperature sensor 7, the microcomputer 8, and the wireless communication device 9 are placed in the internal space 12 of the housing 20.

The microcomputer 8 includes a detection data acquisition unit 81, a processing unit 82, and a change unit 83.

The detection data acquisition unit 81 acquires detection data of the vibration sensor 6. The detection data acquisition unit 81 acquires detection data of the temperature sensor 7.

The processing unit 82 processes the detection data of the vibration sensor 6 acquired by the detection data acquisition unit 81 and outputs processed data. The processed data is data generated by performing data processing on the detection data. The processing unit 82 can process the detection data of the vibration sensor 6 on the basis of a vibration analysis method such as fast Fourier transform (FFT) and output the processed data.

The processed data generated by the processing unit 82 includes at least one of peak values, a root mean square value, and a frequency of vibration of the apparatus B calculated from the detection data of the vibration sensor 6.

The processing unit 82 processes the detection data of the vibration sensor 6, thereby calculating peak values of the vibration of the apparatus B. The peak values of the vibration include a maximum value Ph and a minimum value Pl of the vibration. The peak values of the vibration may be peak values of acceleration, peak values of speed, or peak values of displacement.

The processing unit 82 processes the detection data of the vibration sensor 6, thereby calculating a root mean square (RMS) value of the vibration of the apparatus B. The RMS value of the vibration may be an RMS value of acceleration, an RMS value of speed, or an RMS value of displacement.

The processing unit 82 processes the detection data of the vibration sensor 6, thereby calculating a frequency of the vibration of the apparatus B. Note that the processing unit 82 may calculate an overall value of the vibration by processing the detection data of the vibration sensor 6.

The change unit 83 changes a sampling frequency of the detection data of the vibration sensor 6 for use in the processing executed by the processing unit 82. In the present embodiment, the detection data acquisition unit 81 acquires detection data from the vibration sensor 6 on the basis of the sampling frequency set by the change unit 83. The change unit 83 changes the sampling frequency of the detection data of the vibration sensor 6 acquired by the detection data acquisition unit 81.

In the present embodiment, an operating device 15 such as a dip switch is provided on an outer surface of the housing 20. Note that the operating device 15 may be provided on an inner surface of the housing 20. An operator can operate the operating device 15 so as to change the sampling frequency. The change unit 83 changes the sampling frequency on the basis of operation data generated by operating the operating device 15.

The wireless communication device 9 transmits the detection data of the vibration sensor 6 acquired by the detection data acquisition unit 81 to the management computer 100 existing outside the thermoelectric generator 1. The wireless communication device 9 further transmits, to the management computer 100, the processed data serving as the detection data processed by the processing unit 82. The wireless communication device 9 further transmits, to the management computer 100, the detection data of the temperature sensor 7 acquired by the detection data acquisition unit 81.

In the following description, a mode for transmitting the detection data of the vibration sensor 6 to the management computer 100 will be appropriately referred to as "detection data transmission mode", and a mode for transmitting the processed data generated by the processing in the processing unit 82 to the management computer 100 will be appropriately referred to as "processed data transmission mode".

### <Operation>

Next, there will be described an example of operation of the thermoelectric generator 1 according to the present embodiment. The thermoelectric generator 1 is installed on the apparatus B provided in an industrial facility. In driving the apparatus B, the vibration sensor 6 detects vibration of the apparatus B, and the temperature sensor 7 detects a temperature of the apparatus B.

When the apparatus B is driven, the apparatus B generates heat. The heat of the apparatus B is transferred to the thermoelectric generator module 5 via the heat receiver 2 and the heat transfer member 10. The thermoelectric generator module 5 that has received the heat generates power. The vibration sensor 6, the temperature sensor 7, the microcomputer 8, and the wireless communication device 9 are driven by the power generated by the thermoelectric generator module 5. In the detection data transmission mode, the microcomputer 8 transmits the detection data of the vibration sensor 6 and the detection data of the temperature sensor 7 to the management computer 100 of the industrial facility existing outside the thermoelectric generator 1 via the wireless communication device 9. The thermoelectric generator 1 is installed on each of a plurality of apparatuses B in the industrial facility. The management computer 100 can monitor and manage a state of each of the plurality of apparatuses B on the basis of the detection data of the vibration sensor 6 and the detection data of the temperature sensor 7 transmitted from corresponding one of the plurality of thermoelectric generators 1. Based on the detection data of the vibration sensor 6 and the detection data of the temperature sensor 7 transmitted from the thermoelectric generator 1, the management computer 100 can diagnose whether or not the apparatus B is abnormal.

In the processed data transmission mode, the microcomputer 8 transmits the processed data generated by the processing unit 82 to the management computer 100 of the industrial facility existing outside the thermoelectric generator 1 via the wireless communication device 9. The management computer 100 can monitor and manage the state of each of the plurality of apparatuses B on the basis of the processed data transmitted from corresponding one of the plurality of thermoelectric generators 1. Based on the processed data transmitted from the thermoelectric generator 1, the management computer 100 can diagnose whether or not the apparatus B is abnormal.

### <Detection data transmission mode>

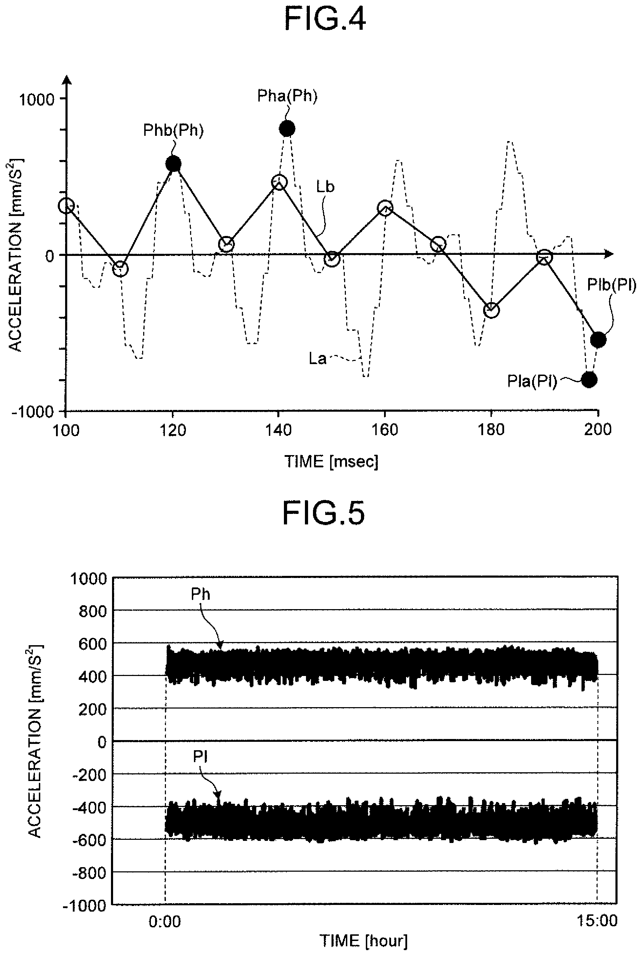

The detection data transmission mode will be described. FIG. 4 illustrates detection data of the vibration sensor 6 according to the present embodiment. In the graph of FIG. 4, the vertical axis represents acceleration detected by the vibration sensor 6, and the horizontal axis represents time. As illustrated in FIG. 4, the change unit 83 changes a sampling frequency of the detection data of the vibration sensor 6 acquired by the detection data acquisition unit 81. The change unit 83 can change the sampling frequency from one of first and second sampling frequency to the other. The first sampling frequency is larger than the second sampling frequency. In the following description, the first sampling frequency is 1000 Hz, and the second sampling frequency is 100 Hz.

In a case where the change unit 83 sets the first sampling frequency (1000 Hz) as the sampling frequency, the detection data acquisition unit 81 acquires detection data of the vibration sensor 6 at the first sampling frequency. Thus, the detection data acquisition unit 81 can acquire vibration waveform data indicated by line La in FIG. 4.

In a case where the change unit 83 sets the second sampling frequency (100 Hz) as the sampling frequency, the detection data acquisition unit 81 acquires detection data of the vibration sensor 6 at the second sampling frequency. Thus, the detection data acquisition unit 81 can acquire vibration waveform data indicated by line Lb in FIG. 4.

The detection data acquisition unit 81 acquires the detection data of the vibration sensor 6 in a first specified time period. The first specified time period is, for example, 0.1 seconds. Note that the first specified time period may be any value from 0.01 seconds to 10 seconds. The first specified time period is determined on the basis of, for example, performance of the microcomputer 8.

In a case where the first specified time period is 0.1 seconds and the first sampling frequency is 1000 Hz, the detection data acquisition unit 81 acquires one hundred pieces of detection data in the first specified time period. In a case where the first specified time period is 0.1 seconds and the second sampling frequency is 100 Hz, the detection data acquisition unit 81 acquires ten pieces of detection data in the first specified time period.

The wireless communication device 9 transmits the detection data of the vibration sensor 6 acquired by the detection data acquisition unit 81 to the management computer 100. The wireless communication device 9 transmits the detection data of the vibration sensor 6 to the management computer 100 every second specified time period. The second specified time period is, for example, 20 seconds. Note that the second specified time period may be any value from 10 seconds to 500 seconds. The wireless communication device 9 is driven by power generated by the thermoelectric generator module 5. The power generated by the thermoelectric generator module 5 is stored in the power storage unit 16. When the power stored in the power storage unit 16 exceeds a predetermined amount, the wireless communication device 9 transmits the detection data. Therefore, the second specified time period is determined on the basis of, for example, the power generated by the thermoelectric generator module 5.

An amount of the detection data acquired at the first sampling frequency is large. For example, it may be difficult to smoothly transmit the detection data acquired at the first sampling frequency from the thermoelectric generator 1 to the management computer 100 due to a data communication capability of a communication line. The change unit 83 can set, as the sampling frequency, the second sampling frequency smaller than the first sampling frequency on the basis of the data communication capability of the communication line.

In a case where the data communication capability of the communication line is sufficient to smoothly transmit the detection data acquired at the first sampling frequency from the thermoelectric generator 1 to the management computer 100, the change unit 83 sets the first sampling frequency (1000 Hz) as the sampling frequency. Thus, a large amount of detection data of the vibration sensor 6 is transmitted to the management computer 100. Based on the large amount of detection data of the vibration sensor 6 transmitted from the thermoelectric generator 1, the management computer 100 can accurately diagnose whether or not the apparatus B is abnormal.

In a case where the data communication capability of the communication line is insufficient to smoothly transmit the detection data acquired at the first sampling frequency from the thermoelectric generator 1 to the management computer 100, the change unit 83 sets the second sampling frequency (100 Hz) as the sampling frequency. Thus, a small amount of detection data of the vibration sensor 6 is transmitted to the management computer 100. Based on the small amount of detection data of the vibration sensor 6 transmitted from the thermoelectric generator 1, the management computer 100 can smoothly diagnose whether or not the apparatus B is abnormal.

### <Processed data transmission mode>

Next, the processed data transmission mode will be described. As described above, the processed data generated by the processing unit 82 includes at least one of peak values, an RMS value, and a frequency of vibration. In the following description, an example of transmitting peak values of vibration as the processed data will be described. In the processed data transmission mode, the detection data of the vibration sensor 6 is not transmitted.

The processing unit 82 processes the detection data of the vibration sensor 6 acquired by the detection data acquisition unit 81, thereby calculating the peak values (maximum value Ph and minimum value Pl) of vibration as the processed data. The wireless communication device 9 can transmit, to the management computer 100, the maximum value Ph and the minimum value Pl serving as the processed data output from the processing unit 82.

The processing unit 82 can calculate the maximum value Ph and the minimum value Pl of vibration from both the detection data acquired at the first sampling frequency (1000 Hz) and the detection data acquired at the second sampling frequency (100 Hz).

In the following description, the maximum value Ph and the minimum value Pl of vibration calculated from the detection data acquired at the first sampling frequency (1000 Hz) will be appropriately referred to as "maximum value Pha" and "minimum value Pla", respectively. Further, the maximum value Ph and the minimum value Pl of vibration calculated from the detection data acquired at the second sampling frequency (100 Hz) will be appropriately referred to as "maximum value Phb" and "minimum value Plb", respectively.

When the detection data acquired at the first sampling frequency is processed, the maximum value Pha and the minimum value Pla are accurately calculated. When the detection data acquired at the second sampling frequency is processed, an operation load on the processing unit 82 to calculate the maximum value Phb and the minimum value Plb is reduced.

The wireless communication device 9 transmits, to the management computer 100, the maximum value Ph and the minimum value Pl serving as the processed data output from the processing unit 82. The amount of processed data (maximum value Ph and minimum value Pl) is smaller than the amount of detection data (raw data). Because the processed data is transmitted, the wireless communication device 9 can smoothly transmit the processed data from the thermoelectric generator 1 to the management computer 100 even in a case where the data communication capability of the communication line is insufficient. Based on the processed data transmitted from the thermoelectric generator 1, the management computer 100 can diagnose whether or not the apparatus B is abnormal. For example, in a case where the peak values exceed predetermined thresholds, the management computer 100 can diagnose that the apparatus B is abnormal.

As illustrated in FIG. 4, the maximum value Pha and the maximum value Phb may be different. Similarly, the minimum value Pla and the minimum value Plb may be different. That is, in a case where the sampling frequency is small, it may be difficult to accurately calculate the peak values.

In the present embodiment, in a case where the second sampling frequency is set as the sampling frequency, the detection data acquisition unit 81 acquires detection data in the first specified time period, and the processing unit 82 calculates a maximum value Ph_i and a minimum value Pl_i of vibration in the first specified time period.

FIG. 5 is a diagram for describing a method of calculating the maximum value Ph and the minimum value Pl of vibration according to the present embodiment. In the graph of FIG. 5, the vertical axis represents acceleration detected by the vibration sensor 6, and the horizontal axis represents time.

As first detection-data acquisition processing, the detection data acquisition unit 81 acquires detection data of the vibration sensor 6 at the second sampling frequency (100 Hz) in the first specified time period (0.1 seconds). As first processed-data calculation processing, the processing unit 82 calculates the maximum value Ph_1 and the minimum value Pl_1 of vibration in the first specified time period which have been acquired in the first acquisition processing.

As second detection-data acquisition processing, the detection data acquisition unit 81 acquires detection data of the vibration sensor 6 at the second sampling frequency (100 Hz) in the first specified time period (0.1 seconds). As second processed-data calculation processing, the processing unit 82 calculates the maximum value Ph_2 and the minimum value Pl_2 of vibration in the first specified time period which have been acquired in the second acquisition processing.

As i-th detection-data acquisition processing, the detection data acquisition unit 81 acquires detection data of the vibration sensor 6 at the second sampling frequency (100 Hz) in the first specified time period (0.1 seconds). As i-th processed-data calculation processing, the processing unit 82 calculates the maximum value Ph_i and the minimum value Pl_i of vibration in the first specified time period which have been acquired in the i-th acquisition processing.

As N-th detection-data acquisition processing, the detection data acquisition unit 81 acquires detection data of the vibration sensor 6 at the second sampling frequency (100 Hz) in the first specified time period (0.1 seconds). As N-th processed-data calculation processing, the processing unit 82 calculates the maximum value Ph_N and the minimum value Pl_N of vibration in the first specified time period which have been acquired in the N-th acquisition processing.

As described above, the processing unit 82 executes, N times (a plurality of times), processing of calculating the maximum value Ph_i and the minimum value Pl_i of vibration in the first specified time period. The processing unit 82 calculates N maximum values Ph_i and N minimum values Pl_i. The NN maximum values Ph_i and minimum values Pl_i calculated by the processing unit 82 are transmitted from the wireless communication device 9 to the management computer 100.

The management computer 100 determines the largest value among the acquired N (a plurality of) maximum values Ph_i as the maximum value Ph for use in diagnosis of the presence or absence of abnormality. The management computer 100 determines the smallest value among the N (a plurality of) minimum values Pl_i as the minimum value Pl for use in diagnosis of the presence or absence of abnormality.

As described above, in the present embodiment, the processing unit 82 executes, a plurality of times, the processing of calculating the peak values (maximum value Ph_i and minimum value Pl_i) of vibration in the detection data of the vibration sensor 6 acquired in the second specified time period (20 seconds). The management computer 100 determines the peak values (maximum value Ph and minimum value Pl) for use in diagnosis of the presence or absence of abnormality from the plurality of peak values (maximum values Ph_i and minimum values Pl_i) acquired from the calculation processing executed a plurality of times.

In a case where the sampling frequency is small, it is difficult to calculate an accurate maximum value Ph and minimum value Pl in the first specified time period (0.1 seconds). Even in this case, it is possible to determine an accurate maximum value Ph and minimum value Pl by executing the calculation processing of calculating the maximum value Ph_i and the minimum value Pl_i every first specified time period (every 0.1 seconds) a plurality of times, determining the maximum value Ph from the plurality of calculated maximum values Ph_i, and determining the minimum value Pl from the plurality of minimum values Pl_i. That is, executing the processing of calculating the maximum value Ph_i a plurality of times increases the probability of acquiring, from the plurality of maximum values Ph_i, the maximum value Ph identical to a true maximum value or the maximum value Ph approximate to the true maximum value. Similarly, executing the processing of calculating the minimum value Pl_i a plurality of times increases the probability of acquiring, from the plurality of minimum values Pl_i, the minimum value Pl identical to a true minimum value or the minimum value Pl approximate to the true minimum value. Therefore, the management computer 100 can determine the accurate maximum value Ph and minimum value Pl.

Note that the present embodiment describes an example in which peak values (maximum value Ph and minimum value Pl) for use in diagnosis of the presence or absence of abnormality are determined from a plurality of peak values (maximum values Ph_i and minimum values Pl_i) acquired from the calculation processing executed a plurality of times. As described above, as described above, the processed data generated by the processing unit 82 includes at least one of peak values, an RMS value, and a frequency of vibration. Processed data for use in diagnosis of the presence or absence of abnormality may be determined from the processed data including the peak values, RMS value, and frequency of vibration.

### <Effects>

As described above, according to the present embodiment, the thermoelectric generator 1 including the thermoelectric generator module 5, the vibration sensor 6 driven by power generated by the thermoelectric generator module 5, and the wireless communication device 9 that transmits detection data of the vibration sensor 6 is installed on the apparatus B. The thermoelectric generator module 5 can generate power by a temperature difference between the heat receiver 2 and the heat radiator 3. The vibration sensor 6 is driven by the power generated by the thermoelectric generator module 5. In the detection data transmission mode, the wireless communication device 9 is driven by the power generated by the thermoelectric generator module 5 to transmit the detection data of the vibration sensor 6. Thus, the vibration sensor 6 and the wireless communication device 9 are driven without using a cable or battery connecting the vibration sensor 6 and the power supply. The detection data of the vibration sensor 6 is transmitted to the management computer 100 only by installing the thermoelectric generator 1 on the apparatus B. Based on the detection data of the vibration sensor 6, the management computer 100 can efficiently diagnose whether or not the apparatus B is abnormal. Even in a case where a plurality of apparatuses B exist in the industrial facility, the management computer 100 can efficiently diagnose whether or not each of the plurality of apparatuses B is abnormal only when the thermoelectric generator 1 is installed on each of the plurality of apparatuses B.

The microcomputer 8 includes the processing unit 82 that processes detection data of the vibration sensor 6. An amount of processed data generated by the processing unit 82 is smaller than an amount of detection data acquired by the detection data acquisition unit 81. Even in a case where the data communication capability of the communication line is insufficient, the wireless communication device 9 can smoothly transmit the small amount of processed data to the management computer 100.

The processed data transmitted to the management computer 100 includes peak values (maximum value Ph and minimum value Pl) of vibration. Based on the maximum value Ph and the minimum value Pl of vibration, the management computer 100 can diagnose whether or not the apparatus B is abnormal. In a case where the maximum value Ph of vibration exceeds a predetermined upper threshold or in a case where the minimum value Pl of vibration falls below a predetermined lower threshold, the management computer 100 can diagnose that the apparatus B is abnormal. Further, the management computer 100 can diagnose that the apparatus B is abnormal on the basis of the RMS value or frequency of vibration.

The microcomputer 8 includes the change unit 83 that changes a sampling frequency of detection data of the vibration sensor 6 for use in the processing executed by the processing unit 82. Accordingly, the change unit 83 can set an appropriate sampling frequency in consideration of the data communication capability of the communication line or the operation load on the processing unit 82.

In the processed data transmission mode, the processing unit 82 executes, a plurality of times, the processing of calculating the peak values (maximum value Ph_i and the minimum value Pl_i) of vibration in the detection data of the vibration sensor 6 acquired in the first specified time period, and the management computer 100 determines the peak values (maximum value Ph and minimum value Pl) for use in diagnosis of the presence or absence of abnormality from the plurality of peak values (maximum values Ph_i and minimum values Pl_i) acquired from the calculation processing executed a plurality of times. Thus, even in a case where the sampling frequency is small and it is difficult to calculate an accurate maximum value Ph and minimum value Pl in the first specified time period, the management computer 100 can determine the accurate maximum value Ph and minimum value Pl because the calculation processing of calculating the maximum value Ph_i and the minimum value Pl_i is executed a plurality of times.

The temperature sensor 7 driven by power generated by the thermoelectric generator module 5 is provided, and detection data of the temperature sensor 7 is transmitted to the management computer 100. Thus, the management computer 100 can accurately diagnose whether or not the apparatus B is abnormal on the basis of both the detection data of the vibration sensor 6 and the detection data of the temperature sensor 7. In a case where an abnormality occurs in the apparatus B, only a change in vibration is detected immediately after the occurrence of the abnormality, and an increase in temperature is detected with the lapse of time in many cases. In a case where both the detection data of the vibration sensor 6 and the detection data of the temperature sensor 7 are acquired, it is possible to diagnose whether or not the apparatus B is abnormal more accurately.

The thermoelectric generator module 5, the vibration sensor 6, the temperature sensor 7, the microcomputer 8, and the wireless communication device 9 are housed in a single housing 20. This reduces, for example, influence of noise on the detection data of the vibration sensor 6 or the detection data of the temperature sensor 7.

### <Modification examples>

Note that, in the above embodiment, the sampling frequency is changed on the basis of operation of the operating device 15. The sampling frequency may be changed on the basis of a change command transmitted from the management computer 100. The wireless communication device 9 receives a change command transmitted from the management computer 100. The wireless communication device 9 transmits the received change command to the processing unit 82. Based on the change command, the processing unit 82 changes the sampling frequency of the detection data for use in the processing. Note that the management computer 100 can output not only the change command to change the sampling frequency but also various change commands to change settings regarding the processing of the detection data. The change of the settings regarding the processing of the detection data includes at least one of a change of the sampling frequency of the detection data for use in the processing executed by the processing unit 82, a change of a frequency of wireless communication between the wireless communication device 9 and the management computer 100, and a change of transmission times, per unit time, of the detection data transmitted from the wireless communication device 9 to the management computer 100.

Note that the management computer 100 may be configured by a single computer or may be configured by a plurality of computers.

### [Second Embodiment]

A second embodiment will be described. In the following description, the same or equivalent components as those of the above embodiment are denoted by the same reference signs, and description thereof is simplified or omitted.

In the above first embodiment, the thermoelectric generator module 5, the vibration sensor 6, the temperature sensor 7, the microcomputer 8, and the wireless communication device 9 are housed in the single housing 20.

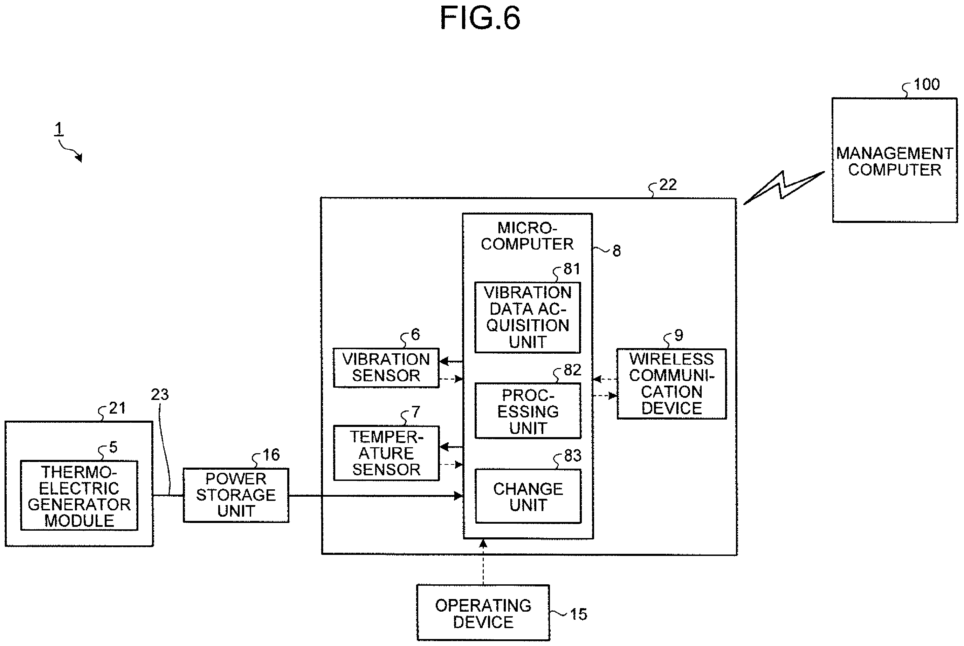

FIG. 6 is a block diagram of the thermoelectric generator 1 according to the present embodiment. As illustrated in FIG. 6, the thermoelectric generator module 5 may be housed in a first housing 21, and the vibration sensor 6, the temperature sensor 7, the microcomputer 8, and the wireless communication device 9 may be housed in a second housing 22. In the example of FIG. 6, the power storage unit 16 is placed between the first housing 21 and the second housing 22. The first housing 21 and the second housing 22 are different housings. The first housing 21 and the second housing 22 are connected by a cable 23. Both the first housing 21 and the second housing 22 are installed on the apparatus B. Power generated by the thermoelectric generator module 5 is supplied to the vibration sensor 6, the temperature sensor 7, the microcomputer 8, and the wireless communication device 9 housed in the second housing 22 via the cable 23 and the power storage unit 16.

### [Third Embodiment]

A third embodiment will be described. In the following description, the same or equivalent components as those of the above embodiment are denoted by the same reference signs, and description thereof is simplified or omitted.

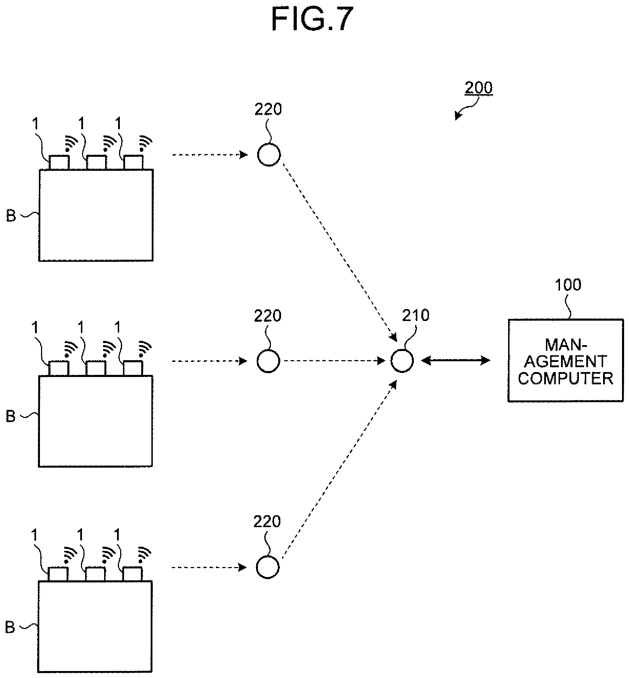

FIG. 7 is a schematic diagram of a vibration detection system 200 according to the present embodiment. As illustrated in FIG. 7, the vibration detection system 200 includes a plurality of thermoelectric generators 1 installed on the apparatus B. As described in the above embodiments, the thermoelectric generator 1 includes the thermoelectric generator module 5, the vibration sensor 6 driven by power generated by the thermoelectric generator module 5, and the wireless communication device 9 that transmits detection data of the vibration sensor 6. The wireless communication device 9 wirelessly transmits the detection data of the vibration sensor 6. The wireless communication device 9 can transmit such processed data as described in the above embodiments. The thermoelectric generator 1 further includes the temperature sensor 7. As described in the above first embodiment, the thermoelectric generator module 5, the vibration sensor 6, the temperature sensor 7, the microcomputer 8, and the wireless communication device 9 may be housed in the single housing 20. As described in the above second embodiment, the thermoelectric generator module 5 may be housed in the first housing 21, and the vibration sensor 6, the temperature sensor 7, the microcomputer 8, and the wireless communication device 9 may be housed in the second housing 22.

A plurality of apparatuses B are provided in the industrial facility. Examples of the apparatus B encompass a motor for operating a pump. The apparatus B may be, for example, a motor for operating a pump for use in a sewer. The apparatus B may be installed underground. In the present embodiment, a plurality of thermoelectric generators 1 are installed on a single apparatus B. The apparatus B functions as a heat source of the thermoelectric generators 1.

The vibration detection system 200 includes a communication device 210 and repeaters 220. The communication device 210 receives detection data of the vibration sensor 6 transmitted from each of the plurality of thermoelectric generators 1 and transmits the detection data to the management computer 100, and the repeaters 220 connect the thermoelectric generators 1 and the communication device 210. The plurality of repeaters 220 are provided. The repeaters 220 and the communication device 210 wirelessly communicate with each other. The communication device 210 and the management computer 100 may perform wireless communication or wired communication.

When the apparatus B operates and generates heat, a temperature difference is caused between the heat receiver 2 and the heat radiator 3. The thermoelectric generator module 5 can generate power by the temperature difference between the heat receiver 2 and the heat radiator 3. The vibration sensor 6 is driven by the power generated by the thermoelectric generator module 5. Further, the power generated by the thermoelectric generator module 5 is stored in the power storage unit 16 included in the thermoelectric generator 1. When the power stored in the power storage unit 16 exceeds a predetermined amount, the wireless communication device 9 transmits detection data of the vibration sensor 6. The wireless communication device 9 periodically transmits the detection data.

The detection data of the vibration sensor 6 from the wireless communication device 9 is transmitted to the communication device 210 via the repeater 220. The detection data is transmitted from each of the plurality of thermoelectric generators 1 to the communication device 210. The communication device 210 processes the detection data transmitted from each of the plurality of thermoelectric generators 1 in a predetermined format, and then transmits the detection data to the management computer 100. The management computer 100 can monitor and manage a state of each of the plurality of apparatuses B on the basis of the detection data of the vibration sensor 6 transmitted from each of the plurality of thermoelectric generators 1. The management computer 100 can diagnose whether or not the apparatus B is abnormal on the basis of the detection data of the vibration sensor 6 transmitted from each of the plurality of thermoelectric generators 1.

The detection data from each of the plurality of thermoelectric generators 1 is collected by the communication device 210 and is then transmitted to the management computer 100. The plurality of thermoelectric generators 1 can independently transmit the detection data. That is, the thermoelectric generator 1 can transmit the detection data without being affected by other thermoelectric generators 1.

For example, in a case where the apparatuses B and the thermoelectric generators 1 exist in the underground while the communication device 210 and the management computer 100 exist on the ground, the vibration sensors 6 transmitted from the thermoelectric generators 1 are smoothly transmitted to the management computer 100 by providing the repeaters 220.

Power generated by the thermoelectric generator module 5 increases as the temperature difference between the heat receiver 2 and the heat radiator 3 increases. That is, the power generated by the thermoelectric generator module 5 is stored in the power storage unit 16 in a shorter time as the temperature difference between the heat receiver 2 and the heat radiator 3 increases. Therefore, a period in which the wireless communication device 9 transmits the detection data becomes shorter as the temperature difference between the heat receiver 2 and the heat radiator 3 increases. In a case where the apparatus B becomes abnormal, it is highly possible that an amount of heat generated by the apparatus B increases. That is, in a case where the apparatus B becomes abnormal, it is highly possible that the temperature difference between the heat receiver 2 and the heat radiator 3 increases. Therefore, in a case where the apparatus B becomes abnormal, the period in which the wireless communication device 9 transmits the detection data becomes shorter. In a case where the apparatus B becomes abnormal, the amount of detection data transmitted from the thermoelectric generator 1 to the management computer 100 increases. Thus, the management computer 100 can efficiently analyze whether or not the apparatus B is abnormal.

As described above, according to the present embodiment, the vibration detection system 200 includes: the plurality of thermoelectric generators 1 installed on each of the plurality of apparatuses B; and the communication device 210 that receives detection data transmitted from each of the plurality of thermoelectric generators 1 and transmits the detection data to the management computer 100. Therefore, the management computer 100 can monitor and manage the states of the plurality of apparatuses B and diagnose whether or not the plurality of apparatuses B are abnormal. Further, the thermoelectric generator module 5 functions as a power supply, and the wireless communication device 9 wirelessly transmits the detection data. Therefore, the detection data of the vibration sensor 6 can be easily collected only by installing the thermoelectric generator 1 on the apparatus B without, for example, providing a cable in the industrial facility.

### [Other Embodiments]

In the above embodiments, the change unit 83 changes a sampling frequency in response to operation of the operating device 15 provided in the thermoelectric generator 1. A change command to change the sampling frequency may be transmitted from the management computer 100 to the change unit 83. For example, the management computer 100 may output the change command when an input device connected to the management computer 100 is operated by an administrator. Examples of the input device encompass a computer keyboard, a touchscreen, and a mouse.

In the above embodiments, the function of the processing unit 82 may be provided in the management computer 100. The detection data of the vibration sensor 6 may be transmitted to the management computer 100 via the wireless communication device 9, and the management computer 100 may generate processed data. Further, the function of the management computer 100 may be provided in the microcomputer 8. For example, the processing unit 82 may calculate the maximum value Ph and the minimum value Pl of vibration for use in diagnosis of the presence or absence of abnormality.

### Reference Signs List

- 1: THERMOELECTRIC GENERATOR
- 2: HEAT RECEIVER
- 2A: HEAT RECEIVING SURFACE
- 2B: INNER SURFACE
- 3: HEAT RADIATOR
- 3A: HEAT RADIATING SURFACE
- 3B: INNER SURFACE
- 4: PERIPHERAL WALL
- 4B: INNER SURFACE
- 5: THERMOELECTRIC GENERATOR MODULE
- 5P: P-TYPE THERMOELECTRIC SEMICONDUCTOR ELEMENT
- 5N: N-TYPE THERMOELECTRIC SEMICONDUCTOR ELEMENT
- 6: VIBRATION SENSOR
- 7: TEMPERATURE SENSOR
- 8: MICROCOMPUTER
- 9: WIRELESS COMMUNICATION DEVICE
- 10: HEAT TRANSFER MEMBER
- 11: SUBSTRATE
- 11A: SUPPORT MEMBER
- 11B: SUPPORT MEMBER
- 12: INTERNAL SPACE
- 13A: SEAL MEMBER
- 13B: SEAL MEMBER
- 15: OPERATING DEVICE
- 16: POWER STORAGE UNIT
- 20: HOUSING
- 21: FIRST HOUSING
- 22: SECOND HOUSING
- 23: CABLE
- 51: END SURFACE
- 51S: FIRST SUBSTRATE
- 52: END SURFACE
- 52S: SECOND SUBSTRATE
- 53: FIRST ELECTRODE
- 54: SECOND ELECTRODE
- 55: LEAD WIRE
- 81: DETECTION DATA ACQUISITION UNIT
- 82: PROCESSING UNIT
- 83: CHANGE UNIT
- 100: MANAGEMENT COMPUTER
- 200: VIBRATION DETECTION SYSTEM
- 210: COMMUNICATION DEVICE
- 220: REPEATER
- B: APPARATUS

## Claims

1. A thermoelectric generator, comprising:
a thermoelectric generator module;
a vibration sensor driven by power generated by the thermoelectric generator module; and
a wireless communication device that transmits detection data of the vibration sensor.

2. The thermoelectric generator according to claim 1, further comprising
a processing unit that processes the detection data, wherein
the wireless communication device transmits processed data serving as the detection data processed by the processing unit.

3. The thermoelectric generator according to claim 2, wherein
the processed data includes at least one of a peak value, a root mean square value, and a frequency of vibration.

4. The thermoelectric generator according to claim 3, further comprising
a change unit that changes a sampling frequency of the detection data for use in processing executed by the processing unit.

5. The thermoelectric generator according to claim 3, wherein
the wireless communication device receives a change command to change a sampling frequency of the detection data for use in processing executed by the processing unit, and
the processing unit changes the sampling frequency of the detection data on the basis of the change command.

6. The thermoelectric generator according to any one of claims 3 to 5, wherein
the processing unit executes, a plurality of times, calculation processing of the peak value of vibration in the detection data acquired in a first specified time period, and
a peak value for use in diagnosis is determined from the plurality of peak values acquired from the calculation processing executed a plurality of times.

7. The thermoelectric generator according to any one of claims 3 to 6, wherein
processed data for use in diagnosis is determined from the processed data including at least one of the peak value, the root mean square value, and the frequency.

8. The thermoelectric generator according to any one of claims 1 to 7, further comprising
a temperature sensor driven by power generated by the thermoelectric generator module, wherein
the wireless communication device transmits detection data of the temperature sensor.

9. The thermoelectric generator according to any one of claims 1 to 8, wherein
the thermoelectric generator module, the vibration sensor, and the wireless communication device are housed in a housing.

10. The thermoelectric generator according to claim 2, wherein
the wireless communication device receives a change command to change a setting regarding processing of the detection data executed by the processing unit,
the processing unit changes the setting on the basis of the change command, and
the change of the setting includes at least one of a change of a sampling frequency of the detection data for use in the processing executed by the processing unit, a change of a frequency of wireless communication of the wireless communication device, and a change of transmission times, per unit time, of the detection data transmitted from the wireless communication device.

11. A vibration detection system, comprising:
a plurality of thermoelectric generators according to any one of claims 1 to 10; and
a wireless communication device that receives the detection data transmitted from each of the plurality of thermoelectric generators and transmits the detection data to a management computer.

12. The vibration detection system according to claim 11, further comprising
a repeater that connects each of the plurality of thermoelectric generators and the wireless communication device.
